# EUROPEAN PATENT SPECIFICATION

(11) **EP 0 911 812 B1**
(45) Date of publication and mention of the grant of the patent: **21.05.2003**
(21) Application number: 98104843.2
(22) Date of filing: 17.03.1998
(51) Int. Cl.: G11B 5/48

(54) **Head slider supporting device, disk device and suspension**
Träger für Kopfgleitkörper, Plattengerät und Aufhängung
Support de patin pour tête, appareil à disque et suspension

(30) Priority: 20.10.1997 JP 28734297
(43) Date of publication of application: 28.04.1999
(73) Proprietor: FUJITSU LIMITED, Kawasaki-shi, Kanagawa 211-8588 (JP)
(72) Inventor: Ohwe, Takeshi, c/o Fujitsu Limited, Kawasaki-shi, Kanagawa 211-8588 (JP)
(74) Representative: Seeger, Wolfgang, Dipl.-Phys.

(56) References cited:
- EP-A- 0 902 427
- GB-A- 2 256 740
- US-A- 4 616 279
- US-A- 5 014 145
- PATENT ABSTRACTS OF JAPAN vol. 012, no. 079 (P-676), 12 March 1988 & JP 62 217476 A (HITACHI LTD), 24 September 1987,
- PATENT ABSTRACTS OF JAPAN vol. 015, no. 455 (P-1277), 19 November 1991 & JP 03 192513 A (FUJITSU LTD), 22 August 1991,
- PATENT ABSTRACTS OF JAPAN vol. 015, no. 305 (P-1234), 5 August 1991 & JP 03 108120 A (MITSUBISHI ELECTRIC CORP), 8 May 1991,
- PATENT ABSTRACTS OF JAPAN vol. 015, no. 444 (E-1132), 12 November 1991 & JP 03 187295 A (FUJITSU LTD), 15 August 1991,
- PATENT ABSTRACTS OF JAPAN vol. 009, no. 024 (P-331), 31 January 1985 & JP 59 168968 A (FUJITSU KK), 22 September 1984,
- PATENT ABSTRACTS OF JAPAN vol. 006, no. 041 (P-106), 13 March 1982 & JP 56 159864 A (NAKAMATSU YOSHIRO), 9 December 1981,

## Description

### BACKGROUND OF THE INVENTION

### 1. Field of the Invention

The present invention relates to a head slider supporting device, a disk device and a suspension, and, in particular, to a magnetic head slider supporting device, an optical head slider supporting device, a magnetic disk device, an optical disk device and a suspension.

As a result of an increase of the frequency of a signal which an information processing apparatus processes, it is requested that the write current frequency of a magnetic disk device be increased from 70 MHz to 200 through 300 MHz, for example. In order to increase the write current frequency, it is necessary to reduce the inductance and the capacitance of a signal transmission path from a magnetic head slider to a head IC. For this purpose, it is effective to provide the head IC at a position near to the magnetic disk slider. Further, thinning of the magnetic disk device is also requested. It is necessary that the head IC be loaded in the magnetic disk device in a condition in which the thinning of the magnetic disk device is not disturbed, and also, that the head IC does not come into contact with a magnetic disk and so forth even when a shock is applied to the magnetic disk device.

### 2. Description of the Related Art

The magnetic disk devices in each of which the head IC for amplifying a signal write/read through the magnetic head slider is installed on an arm are disclosed in Japanese Laid-Open Patent Application Nos.62-217476, 3-108120, 3-187295, 3-192513 and so forth.

However, in each of the above-mentioned magnetic disk devices, because the distance between the magnetic head slider and the head IC is long, it is difficult to reduce the inductance and the capacitance of the signal transmission path from the magnetic head slider to the head IC. Further, the head IC is packaged by a synthetic resin, and thereby, is thick. As a result, in order to prevent the head IC from coming into contact with a magnetic disk and so forth when a shock is applied to the magnetic disk device, it is necessary to elongate the distance between each adjacent magnetic disks. As a result, the magnetic disk device is thick. Further, because the head IC is packaged by the synthetic resin, the head IC is heavy. As a result, the magnetic head slider is heavy. Thereby, the flying stability of the magnetic head slider above the magnetic disk is degraded, and also, there is a possibility that, when the magnetic head slider comes into contact with a magnetic disk due to a strong shock applied to the magnetic disk device, the shock applied to the magnetic disk is so strong that the magnetic disk is damaged.

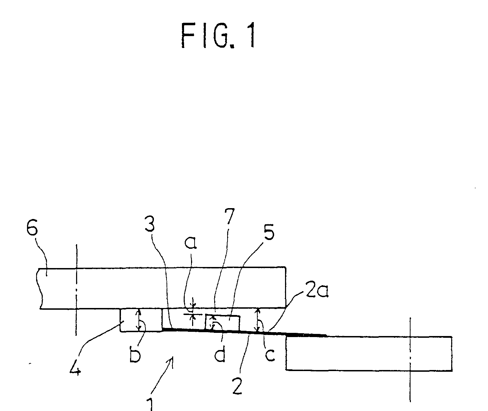

As shown in FIG.1, in a head slider supporting device 1, on the top surface 2a of a suspension 2 (hereinafter, the position of the suspension shown in FIG.1 is a reference position thereof, and 'the top surface' of the suspension means the top surface in this position of the suspension), a wiring pattern 3 is formed from the extending end to the fixed end of the suspension 2, and the magnetic head slider 4 is loaded on the top surface 2a of the suspension 2 at the extending end of the suspension 2.

Here, provision of the head IC 5 will be considered. Due to the arrangement of the wiring pattern 3, a surface at which the head IC is loaded is limited to the top surface 2a of the suspension 2. When considering an increase of the write current frequency, it is preferable that the head IC 5 be provided at a position near to the magnetic head slider 4. Therefore, it is assumed that the head IC 5 is loaded on the top surface 2a of the suspension 2 near the magnetic head slider 4.

In order to prevent the head IC 5 from coming into contact with a magnetic disk 6 even when a strong shock is applied to the magnetic disk device, it is necessary that a gap 7 of the distance 'a' equal to or longer than 0.15 mm be provided between the head IC 5 and the magnetic disk 6.

Recently, in order to thin the magnetic disk device, the magnetic head slider 4 of a small size (a so-called pico-slider, the height 'b' of which is 0.3 mm) has been used. As a result, the distance 'c' between the suspension 2 and the magnetic disk 6 is small.

When considering a bare head IC 5, the bare head IC 5 is cut out from a wafer. Accordingly, the thickness of the bare head IC 5 is determined by the thickness of the wafer. At the present time, it is difficult to make the wafer tinner to less than 0.3 mm. Accordingly, the height (thickness) 'd' of the head IC 5 is approximately 0.3 mm minimum.

Therefore, when the bare head IC 5 is simply loaded an the top surface 2a of the suspension 2, it is difficult to obtain the gap equal to or longer than 0.15 mm between the head IC 5 and the magnetic disk 6. Thus, a special device is needed when the bare head IC 5 is loaded an the top surface 2a of the Suspension 2.

In the head slider support suspension disclosed in GB 2256740, the head IC is simply mounted on the side reverse to the side on which the head slider 1 is mounted. Therefore, wires are needed for connecting between the head slider and head IC.

In the head slider support suspension of EP902427, this document being an interfering document falling under Art.5413) and only relevant for novelty, the head IC 90D is mounted in a tongue portion nearer to the proximal end of the suspension adjacent to a side wall of the suspension.

### SUMMARY OF THE INVENTION

It is an object of the present invention to provide a head slider supporting device, a disk device and a suspension by which the above-described problem is solved.

This object is achieved by the features of claim 1.

The length by which the head IC chip protrudes from the first surface of the suspension is shorter than the thickness of the head IC chip. As a result, in a case where a so-called pico-slider is used as the head slider, a gap can be provided between the head IC chip and a disk such that, even when a strong shock is applied to the disk device, the head IC chip is prevented from coming into contact with the disk. Thus, the disk device can be provided in which the pico-slider is used as the head slider, and also, the head IC chip is mounted an the first surface of the suspension on which the head slider is loaded. Each of the first wiring patterns, electrically connecting the head slider with the head IC chip, can be short, because the head IC chip is mounted on the first surface on which the head slider is loaded. As a result, the inductances of the first wiring patterns are small. Further, the capacitances between adjacent first wiring patterns are small. Therefore, in a case where the disk device is the magnetic disk device, a signal of, for example, 200 MHz, higher than 100 MHz, as in the case of the related art, can be written in and read from the magnetic disk in the magnetic disk device.

The head IC chip mounting prearranged portion may comprise a head IC chip supporting surface portion extending in the suspension along the longitudinal direction of the suspension, both sides of the head IC chip supporting surface portion being cut and then the head IC chip supporting surface portion being pressed to the side of the second surface of the suspension so that the head IC chip supporting surface portion is positioned on the side of the second surface of the suspension, the head IC chip being mounted on the head IC chip supporting surface portion.

Thereby, the head IC chip mounting prearranged portion can be formed without drawing the suspension. Accordingly, the head IC chip mounting prearranged portion can be formed without an excessive stress being applied to the suspension. Further, because both sides of the head IC chip supporting surface portion are cut, that is, the suspension is cut along the longitudinal direction thereof, the head IC chip mounting prearranged portion can be formed with the characteristics of the suspension being affected thereby as little as possible.

The head IC chip may comprise a first half portion and a second half portion, the first half portion having an extending portion, which extends laterally beyond the second half portion of the head IC chip on the side of the first half portion; and
the head IC chip mounting prearranged portion may comprise an opening having a size such that the second half portion of the head IC chip passes through the opening and the extending portion of the first half portion of the head IC chip is supported by a peripheral portion of the opening.

Thereby, the head IC chip mounting prearranged portion can be formed with the characteristics of the suspension being affected thereby as little as possible. Further, merely by causing the second half portion of the head IC chip to pass through the opening and causing the extending portion of the first half portion of the head IC chip to be supported by the peripheral portion of the opening, the height by which the head IC chip protrudes from the first surface of the suspension can be precisely determined. Further, by determining the size of the opening such that the second half portion fits into the opening, providing terminals on the bottom surface of the head IC chip and providing terminals of the first and second wiring patterns along the periphery of the opening, it is possible that the terminals of the head IC chip precisely face the terminals of the first and second wiring patterns merely by causing the second half portion of the head IC chip to pass through the opening. Thereby, it is possible to electrically connect the terminals of the head IC chip with the terminals of the first and second wiring patterns with high reliability.

The head IC chip mounting prearranged portion may comprise an opening having a size such that the above-mentioned certain portion of the head IC chip passes through the opening.

Thereby, the head IC chip mounting prearranged portion can be formed with the characteristics of the suspension being affected thereby as little as possible. In this case, terminals may be provided on side walls of the head IC chip, terminals of the first and second wiring patterns may be provided on a peripheral portion of the opening, and the terminals on the side walls of the head IC chip may be electrically connected with the terminals of the first and second wiring patterns.

The suspension may have a rigid portion between the extending end and the other end having a rib at least one side thereof so that the rigid portion is prevented from bending; and
the head IC chip mounting prearranged portion may be formed in the rigid portion.

Thereby, the head IC chip mounting prearranged portion can be formed with the characteristics of the suspension being affected thereby as little as possible.

A disk device, according to the present invention comprises:
an actuator;
a disk which is rotated;
an arm which is driven by the actuator; and
a head slider supporting device, which is rotated integrally with the arm, the head slider supporting device comprising:
a suspension having an extending end and the other end, a head IC chip mounting prearranged portion being provided between the extending end and the other end thereof;
a head slider loaded on a first surface of the suspension at a position on the side of the extending end with respect to the head IC chip mounting prearranged portion, the head slider integrally including a head;
a head IC chip mounted at the head IC chip mounting prearranged portion of the suspension;
first wiring patterns extending along the suspension between a portion of the suspension at which the head slider is loaded and the head IC chip mounting prearranged portion; and
second wiring patterns extending along the suspension between the head IC chip mounting prearranged portion and the other end of the suspension,
wherein the head IC chip is mounted at the head IC chip mounting prearranged portion in a manner in which a certain portion of the head IC chip is positioned on the side of a second surface of the suspension opposite to the first surface.

Thus, as described above, the length by which the head IC chip protrudes from the first surface of the suspension is shorter than the thickness of the head IC chip. As a result, in a case where a so-called pico-slider is used as the head slider, a gap can be provided between the head IC chip and a disk such that, even when a strong shock is applied to the disk device, the head IC chip is prevented from coming into contact with the disk. Thus, the disk device can be provided in which the pico-slider is used as the head slider, and also, the head IC chip is mounted on the first surface of the suspension. Each of the first wiring patterns, electrically connecting the head slider with the head IC chip, can be short, because the head IC chip is mounted on the first surface on which the head slider is loaded. As a result, the inductances of the first wiring patterns are small. Further, the capacitances between adjacent first wiring patterns are small. Therefore, in a case where the disk device is the magnetic disk device, a signal of, for example, 200 MHz, higher than 100 MHz, as in the case of the related art, can be written in and read from the magnetic disk in the magnetic disk device.

A suspension, according to the present invention, comprises an extending end and the other end, a head IC chip mounting prearranged portion being provided between the extending end and the other end of said suspension, wherein:
a head slider is loaded on a first surface of the suspension at a position on the side of the extending end with respect to the head IC chip mounting prearranged portion, the head slider integrally including a head;
a head IC chip is mounted at the head IC chip mounting prearranged portion of the suspension;
first wiring patterns extend along the suspension between a portion of the suspension at which the head slider is loaded and the head IC chip mounting prearranged portion; and
second wiring patterns extend along the suspension between the head IC chip mounting prearranged portion and the other end of the suspension,
wherein the head IC chip is mounted at the head IC chip mounting prearranged portion in a manner in which a portion of the head IC chip is positioned on the side of a second surface of the suspension opposite to the first surface.

Thus, as described above, the length by which the head IC chip protrudes from the first surface of the suspension is shorter than the thickness of the head IC chip. As a result, in a case where a so-called pico-slider is used as the head slider, a gap can be provided between the head slider and a disk such that, even when a strong shock is applied to the disk device, the head IC chip is prevented from coming into contact with the disk. Thus, the disk device can be provided in which the pico-slider is used as the head slider, and also, the head IC chip is mounted on the first surface of the suspension. Each of the first wiring patterns, electrically connecting the head slider with the head IC chip, can be short, because the head IC chip is mounted on the first surface on which the head slider is loaded. As a result, the inductances of the first wiring patterns are small. Further, the capacitances between adjacent first wiring patterns are small. Therefore, in a case where the disk device is the magnetic disk device, a signal of, for example, 200 MHz, higher than 100 MHz, as in the case of the related art, can be written in and read from the magnetic disk in the magnetic disk device.

The head IC chip mounting prearranged portion may comprise a head IC chip supporting surface portion extending in the suspension along the longitudinal direction of the suspension, the both sides of the head IC chip supporting surface portion being cut and then the head IC chip supporting surface portion being pressed to the side of the second surface of the suspension so that the head IC chip supporting surface portion is positioned on the side of the second surface of the suspension, the head IC chip being mounted on the head IC chip supporting surface portion.

Thereby, the head IC chip mounting prearranged portion can be formed without drawing the suspension. Accordingly, the head IC chip mounting prearranged portion is formed without an excessive stress being applied to the suspension. Further, because the both sides of the head IC chip mounting prearranged portion are cut, that is, the suspension is cut along the longitudinal direction of the suspension, the head IC chip mounting prearranged portion can be formed with the characteristics of the suspension being affected thereby as little as possible.

The head IC chip mounting prearranged portion may comprise an opening having a size such that the certain portion of the head IC chip passes through the opening.

Thereby, the head IC chip mounting prearranged portion can be formed with the characteristics of the suspension being affected thereby as little as possible.

The suspension may have a rigid portion having a rib portion at least one side thereof so that the rigid portion is prevented from bending; and
the head IC chip mounting prearranged portion may be formed in the rigid portion.

Thereby, the head IC chip mounting prearranged portion can be formed with the characteristics of the suspension being affected thereby as little as possible.

Other objects and further features of the present invention will become more apparent from the following detailed description when read in conjunction with the accompanying drawings.

### BRIEF DESCRIPTION OF THE DRAWINGS

FIG.1 is used for discussing a case where a head IC is loaded on a top surface of a suspension in a magnetic head slider supporting device which is disclosed in a Japanese patent application filed by the applicant of the present application;
FIG.2 shows a perspective view of a magnetic head slider supporting device in a first embodiment of the present invention;
FIGS.3A and 3B show a magnetic disk device in which the magnetic head slider supporting device shown in FIG.1 is used;
FIGS.4, 4A and 4B show a structure of a portion at which a head IC chip is mounted in the magnetic head slider supporting device shown in FIG.1;
FIG.5 shows a side elevational sectional view taken along a line V-V of FIG.4;
FIGS.6, 6A and 6B show a structure of a portion at which the head IC chip is mounted in a magnetic head slider supporting device in a second embodiment of the present invention; and
FIGS.7, 7A and 7B show a structure of a portion at which the head IC chip is mounted in a magnetic head slider supporting device in a third embodiment of the present invention.

### DETAILED DESCRIPTIONS OF THE PREFERRED EMBODIMENTS

Each embodiment of the present invention has been obtained as a result of improving the magnetic head slider supporting device disclosed in Japanese Laid-Open Patent Application No.6-215513 which was filed by the applicant of the present application and was laid open.

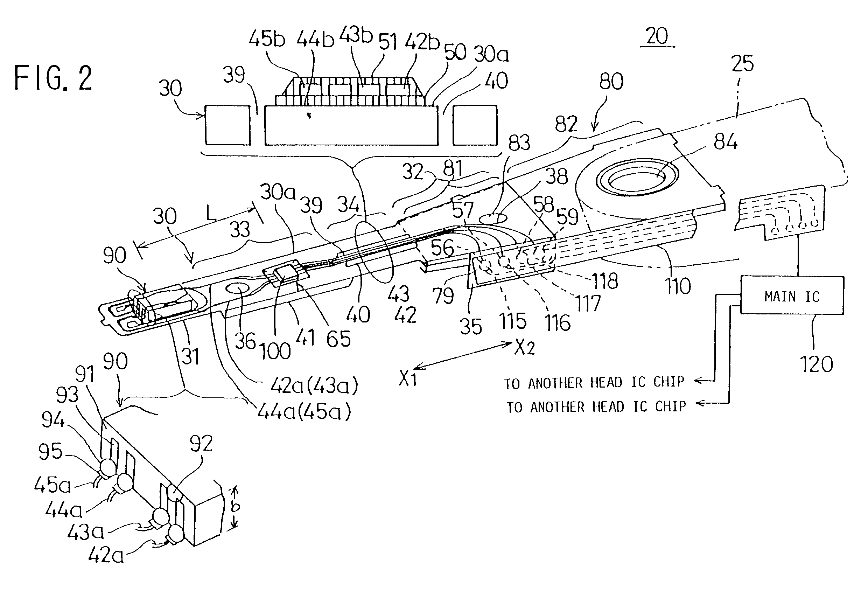

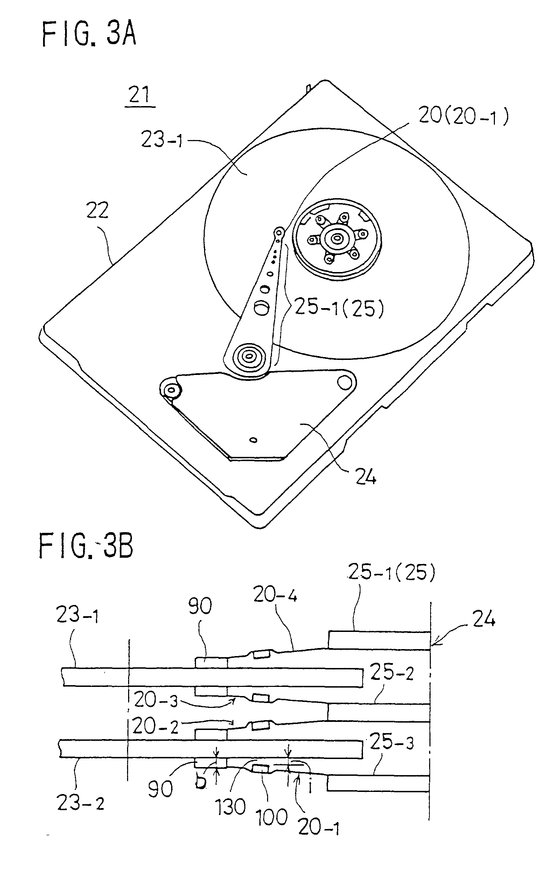

FIG.2 shows a magnetic head slider supporting device 20 in a first embodiment of the present invention. FIGS.3A and 3B show a magnetic disk device 21 having the magnetic head slider supporting device 20 shown in FIG.2.

The magnetic disk device 21 has an arrangement in which two rotating magnetic disks 23-1, 23-2, an actuator 24 which has a coil and a permanent magnet and is driven electromagnetically, arms 25-1, 25-2, 25-3 which are rotated by the actuator 24, and the magnetic head slider supporting devices 20-1, 20-2, 20-3 and 20-4 which are fixed to the extending ends of the arms 25-1, 25-2 and 25-3, respectively, are contained in a housing 22. The magnetic disks 23-1 and 23-2 rotate, the actuator 24 is driven, the arm 25-1, 25-2 and 25-3 are rotated, the magnetic head slider supporting devices 20-1, 20-2, 20-3 and 20-4 are moved integrally with the arms 25-1, 25-2 and 25-3, and magnetic head sliders 90 loaded on the extending ends of the magnetic head slider supporting devices 20-1, 20-2, 20-3 and 20-4, respectively, access predetermined tracks of the magnetic disk 23-1 and 23-2, respectively, so that information recording on and information reproducing from the magnetic disks 23-1 and 23-2 are performed.

The magnetic head slider supporting devices 20-1, 20-2, 20-3 and 20-4 have arrangements the same as one another, and a reference numeral 20 is used for indicating one of these magnetic head slider supporting devices.

As shown in FIG.2, the magnetic head slider supporting device 20 includes a suspension 30, a junction member (spacer) 80, the magnetic head slider 90, a bare head IC chip 100, and a flexible printed-circuit board 110 for wiring.

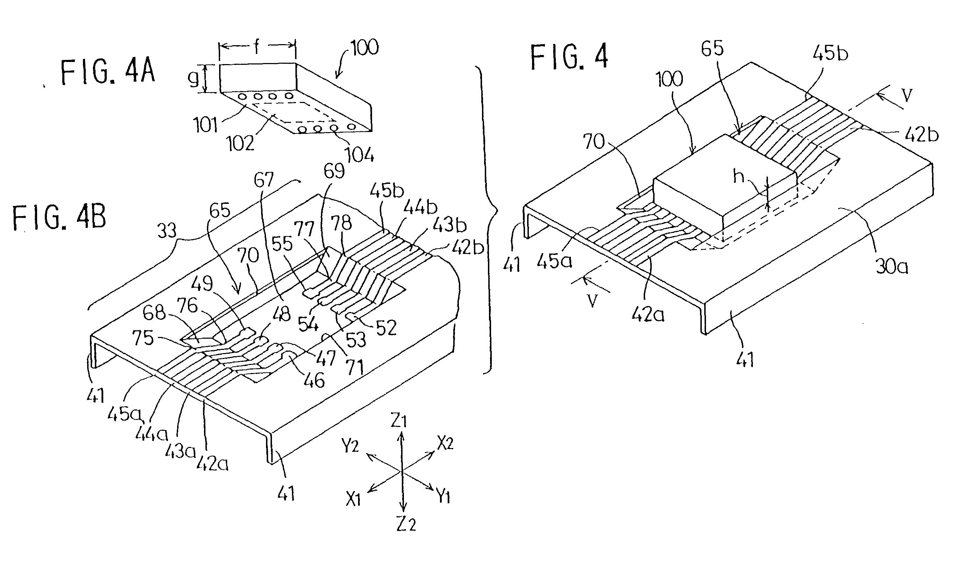

Respective members which constitute the magnetic head slider supporting device 20 will now be described. First, descriptions for the suspension 30 will now be made. The suspension 30 is made of a stainless steel plate having a thickness of 20 µm. The suspension 30 has a magnetic head slider loading prearranged portion 31, having a gimbal structure, at the extending end (X1 side) thereof, a fixing portion 32, which is fixed on the junction member 80, at the fixed end (X2 side) of the suspension 30, a rigid portion 33, which has rigidity and does not bend, continuing to the magnetic head slider loading prearranged portion 31, and an elastically bending portion 34, which elastically bends, extending between the rigid portion 33 and the fixing portion 32. The suspension 30 has a tongue portion 35 which is bent at a right angle along the longitudinal direction of the suspension 30 at one side of the fixing portion 32. Two openings 36, 38 and two slits 39, 40 are formed in the suspension 30. The slits 39, 40 are formed in and in parallel with or in a longitudinal direction of the elastically bending portion 34 so that the elastically bending portion 34 elastically bends easily. The rigidity of the rigid portion 33 is provided by rib portions 41 formed as a result of being bent downwardly at both sides of the width direction of the suspension 30 (see FIGS.4 and 4B).

As will be described later, on the top surface 30a of the suspension 30, a plurality of copper-made wiring patterns 42a, 43a, 44a, 45a, 42b, 43b, 44b and 45b are formed for signal transmission.

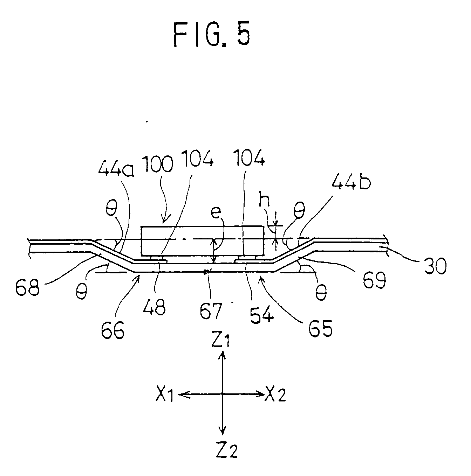

As shown in FIGS.4 and 5, after magnification, a bare head IC chip mounting prearranged portion 65 is formed in the rigid portion 33 of the suspension 30, on the top surface 30a and on the center line of the suspension 30, on the fixed-end side (X2 side) of the opening 36.

The bare head IC chip mounting prearranged portion 65 has a reverse trapezoid shape as shown in FIG.5, as a result of both end sides of a belt-shape portion 66 (shown in FIG.5), extending along the longitudinal direction of the suspension 30, being cut, and the belt-shape portion 66 being pressed downward, by a pressing machine. Thus, the bare head IC chip mounting prearranged portion 65 is formed so as to form a depressed shape in the suspension 30.

In detail, the bare head IC chip mounting prearranged portion 65 has a bare head IC chip supporting surface portion 67, having the plan-view size of the bare head IC chip 100, positioned lower than the top surface 30a of the suspension 30 by a depth 'e', in parallel with the suspension 30; a first slope portion 68 jointing the X1-direction end of the bare head IC chip mounting prearranged portion 65 with the top surface 30a of the suspension 30; and a second slope portion 69 jointing the X2-direction end of the bare head IC chip mounting prearranged portion 65 with the top surface 30a of the suspension 30. There are cut portions 70 and 71 (shown in FIG.4B), which extend in the longitudinal direction (X1, X2 directions) of the suspension 30. The above-mentioned depth 'e' is, for example, 0.2 mm.

Electrically, as shown in FIG.4B, minute pad terminals 46, 47, 48 and 49 are formed to be arranged in the Y1, Y2 directions at the X1-direction end of the bare head IC chip supporting surface portion 67. Similarly, minute pad terminals 52, 53, 54 and 55 are formed to be arranged in the Y1, Y2 directions at the X2-direction end of the bare head IC chip supporting surface portion 67. First wiring patterns 42a, 43a, 44a and 45a extend from the minute pad terminals 46, 47, 48 and 49, respectively, rise on the first slope portion 68 and reach the top surface 30a of the suspension 30. Second wiring patterns 42b, 43b, 44b and 45b extend from the minute pad terminals 52, 53, 54 and 55, respectively, rise on the second slope portion 69 and reach the top surface 30a of the suspension 30.

As shown in FIG.2, the first wiring patterns 42a, 43a, 44a and 45a extend from the magnetic head slider loading prearranged portion 31 in the X2 direction, pass along both sides of the opening 36, and reach the bare head IC chip mounting prearranged portion 65. The second wiring patterns 42b, 43b, 44b and 45b extend in the X2 direction from the bare head IC chip mounting prearranged portion 65, pass between the slits 39 and 40, reach the tongue portion 35 and are terminated to form pads 56, 57, 58 and 59.

As shown in FIG.2, the wiring patterns 42a, 43a, 44a, 45a, 42b, 43b, 44b and 45b are formed on a base layer 50 made of polyimide on the top surface 30a of the suspension 30, and also, are covered by a covering layer 51 so that these wiring patterns are protected by these layers. Because the distance L between the magnetic head slider loading prearranged portion 31 and the bare head IC chip mounting prearranged portion 65 is approximately 3 mm and thus is short, the length of the first wiring patterns 42a, 43a, 44a and 45a is approximately 3 mm and is thus short. Thereby, the inductances of the first wiring patterns 42a, 43a, 44a and 45a are small. Further, the capacitances between adjacent first wiring patterns 42a, 43a, 44a and 45a are small.

A portion including the pads 56, 57, 58 and 59 of the tongue portion 35 constitutes a flexible printed-circuit board connection prearranged portion 79.

Features of the bare head IC chip mounting prearranged portion 65 will now be further described.
1) The bare head IC chip mounting prearranged portion 65 is formed in the rigid portion 33 of the suspension 30 on the top surface 30a thereof. Accordingly, when the bare head IC chip mounting prearranged portion 65 is formed there, the characteristics of the suspension 30 are not influenced thereby.
2) The bare head IC chip mounting prearranged portion 65 is formed as a result of the portions of the suspension 30 being cut and the belt-shape portion 66 between these cut portions 70 and 71 being bent so that the reverse trapezoid shape is formed. That is, the bare head IC chip mounting prearranged portion 65 is formed without drawing the suspension 30. Accordingly, the bare head IC chip mounting prearranged portion 65 is formed without an excessive stress being applied to the suspension 30. In other words, the bare head IC chip mounting prearranged portion 65 is formed without the characteristics of the suspension 30 being influenced thereby.
3) The cut portions 70 and 71 extend in the longitudinal direction of the suspension 30 (X1, X2 directions). Accordingly, the bare head IC chip mounting prearranged portion 65 is formed without the characteristics of the suspension 30 being influenced thereby.
4) With reference to FIG.5, each of the angle θ between the plane extending from the top surface 30a of the suspension 30 and the first slope portion 68, the angle θ between the plane extending from the top surface 30a of the suspension 30 and the second slope portion 69, the angle θ between the plane extending from the bare head IC chip supporting surface portion 67 and the first slope portion 68, and the angle θ between the plane extending from the bare head IC chip supporting surface portion 67 and the second slope portion 69 is on the order of 30 degrees. Accordingly, with reference to FIG.4B, bending is gentle at each of the position 75 at which the first wiring patterns 42a, 43a, 44a and 45a extend from the top surface 30a of the suspension 30 to the first slope portion 68, the position 76 at which the first wiring patterns 42a, 43a, 44a and 45a extend from the first slope portion 68 to the bare head IC chip supporting surface portion 67, the position 77 at which the second wiring patterns 42b, 43b, 44b and 45b extend from the bare head IC chip supporting surface portion 67 to the second slope portion 69, and the position 78 at which the second wiring patterns 42b, 43b, 44b and 45b extend from the second slope portion 69 to the top surface 30a of the suspension 30. Thereby, cutoffs of these wiring patterns at these positions 75, 76, 77 and 78 can be prevented.

Descriptions for the junction member 80 will now be made. The junction member 80 is made of a stainless steel plate having a thickness of 0.25 mm, has a suspension fixing portion 81 on the extending end side (X1 side) thereof and has a fixing portion 82 on the fixed side (X2 side) thereof for fixing the junction member 80 to the arm 25, as shown in FIG.2. The suspension fixing portion 81 has a projection 83 and the fixing portion 82 has a hole 84 for staking. The junction member 80 is used for fixing the suspension 30 to the arm 25, that is, the junction member 80 is used for fixing the magnetic head slider supporting device 20 to the arm 25.

Descriptions for the magnetic head slider 90 will now be made. The magnetic head slider 90 is a so-called pico-slider, and has the height 'b' of 0.3 mm. As shown in FIG.2, a head 92 (consisting of an inductance head for recording and a head for reproducing using a magneto-resistance effect element or a giant magneto-resistance effect element) is formed on an end surface 91 through thin film forming. The magnetic head slider 90 further has two wiring patterns (not shown in FIG.2), drawn from each head, and terminals 93 which are the extending ends of these wiring patterns.

Descriptions for the bare head IC chip 100 will now be made. As shown in FIG.4A, an integrated circuit 102 is formed on the bottom surface 101 of the bare head IC chip 100. The integrated circuit 102 is covered by a protection film and minute bumps 104 are aligned on the bottom surface 101. The arrangement of the minute bumps corresponds to the arrangement of the minute pad terminals 46, 47, 48, 49, 52, 53, 54 and 55. The integrated circuit 102 includes a circuit for amplifying the signal reproduced through the head 92. The width 'f' of the bare head IC chip 100 is, for example, slightly shorter than 1 mm, and thus the bare head IC chip 100 is very short in comparison to a head IC in the related art, which is sealed by synthetic resin, having the width of 5 mm. The thickness 'g' of the bare head IC chip 100 is, for example, 0.3 mm, and thus the bare head IC chip 100 is very thin in comparison to the head IC in the related art, which is sealed by synthetic resin, having the thickness of 2 mm. The weight of the bare head IC chip 100 is 0.5 mg, and thus, the bare head IC chip 100 is very light in comparison to the head IC in the related art, which is sealed by synthetic resin, having the weight of 10 mg.

Descriptions for the flexible printed-circuit board 110 will now be made. The flexible printed-circuit board 110 is a belt-shape member having a width on the order of 1 mm, has four wiring patterns extending in the X1, X2 directions and has four pads 115, 116, 117 and 118 at the extending end of these wiring patterns, as shown in FIG.2.

The arrangement of the magnetic head slider supporting device 20 will now be described.

As shown in FIG.2, positioning of the suspension 30 is performed as a result of the projection 83 being caused to fit into the opening 38, and the fixing portion 32 of the suspension 30 is fixed on the suspension fixing portion 81 of the junction member 80 through welding or the like. The tongue portion 35 is positioned at a side wall side of the junction member 80. The elastically bending portion 34 extends from the junction member 80 in the X1 direction. The magnetic head slider 90 is adhered to the magnetic head slider loading prearranged portion 31, thus being loaded and supported thereon. Each of the terminals 93 of the magnetic head slider 90 is connected with a respective one of pads 95, which are the ends of the first wiring patterns 42a, 43a, 44a and 45a, through thermocompression of a respective one of Au balls 94.

The minute bumps 104 of the bare head IC chip 100 are connected with the minute pad terminals 46, 47, 48, 49, 52, 53, 54 and 55, respectively, through the facedown flip chip method. The bare head IC chip 100 is mounted on the bare head IC chip mounting prearranged portion 65 of the suspension 30 through thermocompression, ultrasonic waves or adhesion. The bare head IC chip 100 is mounted on the bare head IC chip supporting surface portion 67, and is positioned on the surface having the depth 'e' with respect to the top surface 30a of the suspension 30, as shown in FIG.5. As a result, the height 'h' by which the bare head IC chip 100 protrudes from the top surface 30a of the suspension 30 is approximately 0.1 mm which is small.

The pads 115, 116, 117 and 118 of the flexible printed-circuit board 110 are connected with the pads 56, 57, 58 and 59, respectively. Thus, the flexible printed-circuit board 110 is connected with the flexible printed-circuit board connection prearranged portion 79 of the tongue portion 35 and extends in the X2 direction.

The above-described magnetic head slider supporting device 20 is fixed to the extending end of the arm 25 as a result of the hole 84 for staking of the fixing portion 82 of the junction member 80 being used, and thus, extends in the axis direction of the arm 25 from the extending end of the arm 25 in the X1 direction.

The other end of the flexible printed-circuit board 110 is connected with a circuit board (not shown in the figures) of the magnetic disk device 21, and is connected with a main IC 120 which is sealed by synthetic resin and mounted on the above-mentioned circuit board. The main IC 120 includes a recording and reproducing circuit, an amplifying circuit and so forth.

Each of the other magnetic head slider supporting devices in the magnetic disk device 21 has the arrangement the same as the above-described magnetic head slider supporting device 20.

The other end of the flexible printed-circuit board of each of the other magnetic head slider supporting devices in the magnetic disk device 21 is also connected with the main IC 120.

FIGS.3A and 3B show the magnetic disk device 21 in which the above-described magnetic head slider supporting devices 20 (20-1, 20-2, 20-3 and 20-4) are incorporated. FIG.3B shows the state in which the bare head IC chips 100 are mounted and the spatial relationship between the mounted bare head IC chips 100 and the magnetic disks 23-1, 23-2. A gap 130 of the distance 'i' which is approximately 0.2 mm is provided between each of the mounted bare head IC chips 100 and a respective one of the magnetic disks 23-1, 23-2.

The magnetic head slider supporting device 20 (magnetic disk device 21) having the above-described arrangement has the following advantages.
1) The bare head IC chip 100 is mounted in the condition where the bare head IC chip 100 is positioned on the surface having the depth 'e' with respect to the top surface 30a of the suspension 30. Thereby, even in the case where the so-called pico-slider is used as the magnetic head slider 90, the gap 130 of the distance 'i' which is approximately 0.2 mm can be provided between each of the mounted bare head IC chips 100 and a respective one of the magnetic disks 23-1, 23-2. As a result, when a strong shock is applied to the magnetic disk device 21, the bare head IC chips 100 are prevented from coming into contact with the magnetic disks 23-1, 23-2.
2) The length of each of the first wiring patterns 42a, 43a, 44a and 45a is approximately 3 mm and thus each wiring pattern is short. As a result, the inductances of the first wiring patterns 42a, 43a, 44a and 45a are small. Further, the capacitances between adjacent first wiring patterns 42a, 43a, 44a and 45a are small. Therefore, the magnetic disk device 21 can write and read a signal of, for example, 100 MHz, higher than 70 MHz, as in the case of the related art.
3) The weight of the bare head IC chip 100 is 0.5 mg and thus the bare head IC chip 100 is light. Therefore, the influence of each of the bare head IC chips 100, mounted on a respective one of the top surfaces 30a of the suspensions 30, on the contact pressure of a respective one of the magnetic head sliders 90 onto a respective one of the magnetic disks 23-1, 23-2 is slight. Thereby, the stability of floating of each of the magnetic head sliders 20 above a respective one of the magnetic disks 23-1, 23-2 is kept well, and also, when a strong shock is applied to the magnetic disk device 21 and thereby a head crash occurs, that is, the magnetic head sliders 90 come into contact with the magnetic disks 23-1, 23-2, the energy of the head crash can be limited to be small.
4) Because the bare head IC chip mounting prearranged portion 65 does not affect the characteristics of the suspension 30, each of the magnetic head sliders 90 floats above a respective one of the magnetic disks 23-1, 23-2 stably.

A magnetic head slider supporting device in a second embodiment of the present invention will now be described.

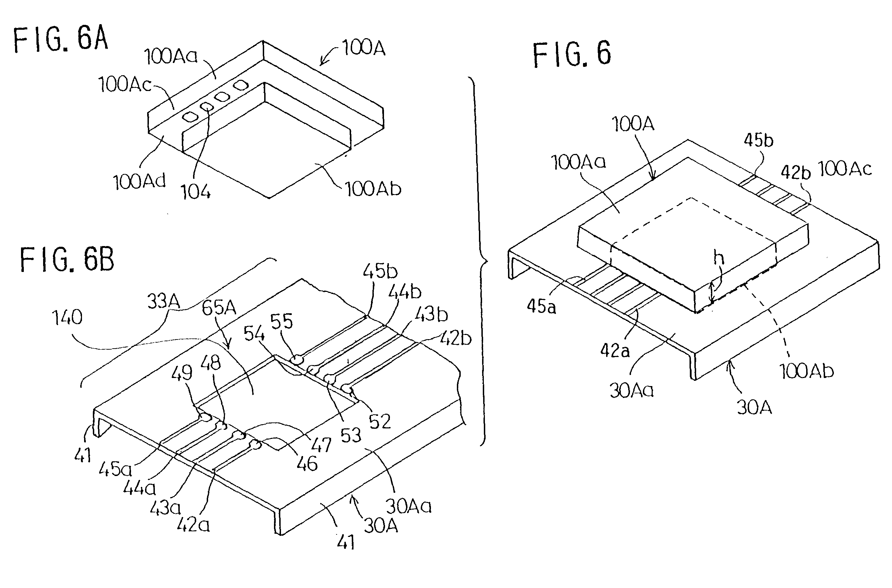

FIGS.6, 6A and 6B show, after magnification, a portion of the magnetic head slider supporting device in the second embodiment of the present invention. For the parts/components identical to those shown in FIGS.4, 4A and 4B, the same reference numerals are given, respectively. For the parts/components corresponding to those shown in FIGS.4, 4A and 4B, the same reference numerals with the suffix 'A' are given, respectively.

As a result of the lower half peripheral portion of a bare head IC chip 100A being, for example, cut out, the size of the upper half portion 100Aa of the bare head IC chip 100A is larger than the size of the lower half portion 100Ab of the bare head IC chip portion 100A, as shown in FIG.6A. Thus, the upper half portion 100Aa has an extending portion 100Ac which extends around and above the lower half portion 100Ab. The bare head IC chip 100A has the plurality of minute bumps 104, arranged side by side, on the bottom surface 100Ad of the extending portion 100Ac.

As shown in FIG.6B, a bare head IC chip mounting prearranged portion 65A has an opening 140 having a size corresponding to the size of the lower half portion 100Ab of the bare head IC chip 100A. Further, along the periphery of the opening 140, the minute pad terminals 46, 47, 48, 49, 52, 53, 54 and 55 are arranged side by side. This bare head IC chip mounting prearranged portion 65A is provided in a rigid portion 33A of a suspension 30A, on a top surface 30Aa thereof.

When the bare head IC chip 100A is mounted on the bare head IC chip mounting prearranged portion 65A, the extending portion 100Ac is supported by the peripheral edge of the opening 140, and the lower half portion 100Ab fits into the opening 140. Thus, the lower half portion 100Ab is positioned lower than the top surface 30Aa of the suspension 30A, and only the upper half portion 100Aa is positioned higher than the top surface 30Aa of the suspension 30A. Because the extending portion 100Ac is supported by the peripheral edge of the opening 140, only by causing the lower half portion 100Ab to fit into the opening 140, the state in which the lower half of the bare head IC chip 100A is positioned lower than the top surface 30Aa of the suspension 30A is provided, without performing a special positioning operation.

The minute bumps 104 on the bottom surface 100Ad of the extending portion 104Ac are electrically connected with the minute pad terminals 46, 47, 48, 49, 52, 53, 54 and 55, respectively, through soldering. As a result of the lower half portion 100Ab fitting into the opening 140, the bare head IC chip 100A is precisely positioned with respect to the bare head IC chip mounting prearranged portion 65A. As a result, the minute bumps 104 face the minute pad terminals 46, 47, 48, 49, 52, 53, 54 and 55, respectively, precisely. As a result, each of the minute bumps 104 and a respective one of the minute pad terminals 46, 47, 48, 49, 52, 53, 54 and 55 are connected with one another with high reliability.

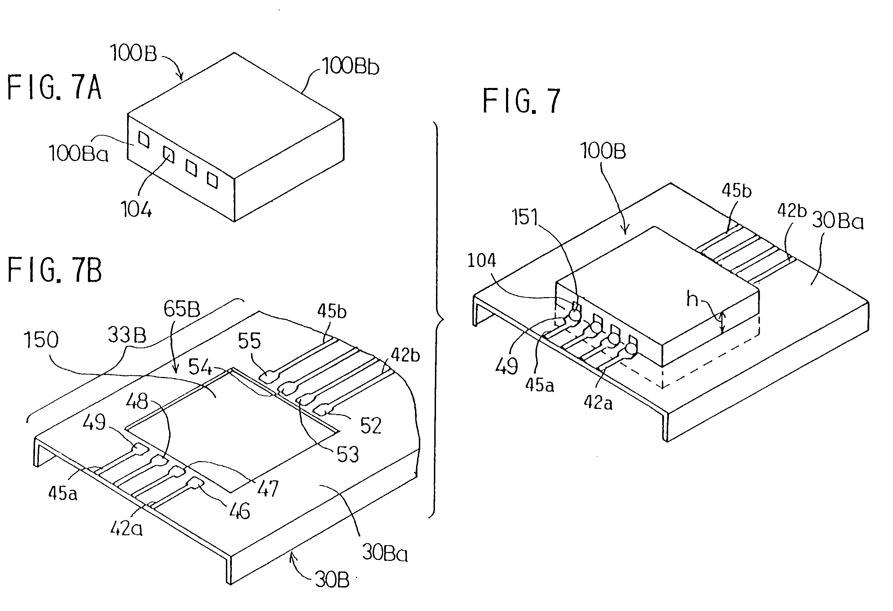

FIGS.7, 7A and 7B show, after magnification, a portion of a magnetic head slider supporting device in a third embodiment of the present invention. For the parts/components identical to those shown in FIGS.4, 4A and 4B, the same reference numerals are given, respectively. For the parts/components corresponding to those shown in FIGS.4, 4A and 4B, the same reference numerals with the suffix 'B' are given, respectively.

As shown in FIG.7A, the plurality of minute bumps 104 are arranged side by side on a side wall 100Ba of a bare head IC chip 100B, in the upper half portion thereof. Similarly, the plurality of minute bumps 104 (not shown in the figures) are arranged side by side also on a side wall 100Bb of the bare head IC chip 100B, opposite to the side wall 100Ba, in the upper half portion thereof.

As shown in FIG.7B, a bare head IC chip mounting prearranged portion 65B has an opening 150 having a size corresponding to the size of the bare head IC chip 100B. Further, along the periphery of the opening 150, the minute pad terminals 46, 47, 48, 49, 52, 53, 54 and 55 are arranged side by side. This bare head IC chip mounting prearranged portion 65B is provided in a rigid portion 33B of a suspension 30B, on a top surface 30Ba thereof.

The lower half portion of the bare head IC chip 100B is inserted into the opening 150 and, thus, a state in which the lower half portion of the bare head IC chip 100B is positioned lower than the top surface 30Ba of the suspension 30B is provided. In this state, each of the minute bumps 104 on the side walls 100Ba, 100Bb is electrically connected with a respective one of the minute pad terminals 46, 47, 48, 49, 52, 53, 54 and 55 arranged along the periphery of the opening 150, through thermocompression of a respective one of Au balls 151, as shown in FIG.7. Thus, the bare head IC chip 100B is fixed to the suspension 30B through the thermocompression of the Au balls 151.

The present invention can also be applied to a head slider supporting device in which, instead of the magnetic head slider, an optical head slider which is integrally provided with an optical head and a slider is mounted on the head slider supporting device. Thus, the present invention can be applied to the suspension for an optical head, an optical head slider supporting device and an optical disk device.

Further, the present invention is not limited to the above-described embodiments, and variations and modifications may be made.

## Claims

1. A suspension having an extending end and an other end, comprising:
a head IC mounting portion (65; 65A; 65B) between said extending end and said other end for mounting a head IC (100; 100A; 100B); and
a head slider mounting portion (31) on one side of said extending end with respect to said head IC mounting portion for mounting a head slider (90), wherein the head slider is mounted on one side of said suspension;
first wiring patterns (42a through 45a) extending along said suspension between said head slider mounting portion (31) and said head IC mounting portion;
second wiring patterns (42b through 45b) extending along said suspension from said IC mounting portion toward said other end of said suspension;
**characterized in that** said head IC mounting portion is formed on a chief surface of said suspension such that said head IC, when disposed therein, is exposed on said one side of said suspension and also projects on the other side of said suspension opposite to said one side.

2. The suspension according to claim 1, wherein said head IC Chip mounting prearranged portion comprises a head IC chip supporting surface portion (67) extending in said suspension along the longitudinal direction of said suspension, both sides of said head IC chip supporting surface portion being cut and then said head IC chip supporting surface portion being pressed to said side of said second surface of said suspension so that said head IC chip supporting surface portion is positioned an said side of said second surface of said suspension, said head IC chip being mounted an said head IC chip supporting surface portion.

3. The suspension according to claim 1, wherein:
said head IC chip (100A) comprises a first half portion and a second half portion, said first half portion having an extending portion (100Ac), which extends laterally beyond said second half portion of said head IC chip on the side of said first half portion; and
said head IC chip mounting prearranged portion (65A) comprises an opening (140) having a size such that said second half portion of said head IC chip passes through said opening and said extending portion of said first half portion of said head IC chip is supported by a peripheral portion of said opening.

4. The suspension according to claim 1, wherein:
said head IC chip mounting prearranged portion (65B) comprises an opening (150) having a size such that said portion of said head IC chip passes through said opening.

5. The suspension according to claim 1, wherein:
said suspension has a rigid portion (33) between said extending end and said other end having a rib portion (41) at least one side thereof so that said rigid portion is prevented from bending; and
said head IC chip mounting prearranged portion is formed in said rigid portion.

6. A disk device comprising:
an actuator (24);
a disk (23-1, 23-2);
an arm (25) driven by said actuator;
the suspension (30) as claimed in claim 1;
a head slider (90) mounted at the head slider mounting portion of said suspension and integrally including a head (92); and
a head IC (100; 100A; 100B) mounted at the head IC mounting portion of said suspension.

7. A head slider assembly comprising:
the suspension (30) as claimed in claim 1;
a head slider (90) mounted at the head slider mounting portion of said suspension and integrally including a head (92); and
a head IC (100; 100A; 100B) mounted at the head IC mounting portion of said suspension.

8. The head slider assembly according to claim 7, wherein said head IC chip mounting prearranged portion comprises a head IC chip supporting surface portion (67) extending in said suspension along the longitudinal direction of said suspension, both sides of said head IC chip supporting surface portion being cut and then said head IC chip supporting surface portion being pressed to said side of said second surface of said suspension so that said head IC chip supporting surface portion is positioned an said side of said second surface of said suspension, said head IC chip being mounted an said head IC chip supporting surface portion.

9. The head slider assembly according to claim 7, wherein said head IC chip mounting prearranged portion (65B) comprises an opening (150) having a size such that said portion of said head IC chip passes through said opening.

10. The head slider assembly according to claim 7, wherein said suspension has a rigid portion (33) having a rib portion (41) at least one side thereof so that said rigid portion is prevented from bending; and said head IC chip mounting prearranged portion is formed in said rigid portion.

11. The suspension according to claim 1, wherein said head IC mounting portion has a space specially formed for the head IC to be disposed such that said head IC is exposed on said one side of said suspension and also projects on the other side of said suspension, said space being surrounded by a portion of said suspension.

12. A disk device comprising:
an actuator;
a disk;
an arm driven by said actuator;
the suspension as claimed in claim 11;
a head slider mounted at the head slider mounting potion of said suspension and integrally including a head; and
a head IC mounted at the head IC mounting portion of said suspension.

13. A head slider assembly comprising:
the suspension as claimed in claim 11;
a head slider mounted at the head slider mounting portion of said suspension and integrally including a head; and
a head IC mounted at the head IC mounting portion of said suspension.

## Patentansprüche

1. Aufhängung mit einem ausladenden Ende und einem anderen Ende, aufweisend:
einen Kopf-IC-Befestigungsteil (65; 65A; 65B) zwischen dem ausladenden Ende und dem anderen Ende zum Befestigen einer Kopf-IC (100; 100A; 100B); und
einen Kopfgleitstück-Befestigungsteil (31) auf einer Seite des ausladenden Endes bezüglich des Kopf-IC-Befestigungsteils zum Befestigen eines Kopfgleitstücks (90), worin das Kopfgleitstück auf einer Seite der Aufhängung befestigt ist;
erste Verdrahtungsmuster (42a bis 45a), die entlang der Aufhängung zwischen dem Kopfgleitstück-Befestigungsteil (31) und dem Kopf-IC-Befestigungsteil verlaufen;
zweite Verdrahtungsmuster (42b bis 45b), die entlang der Aufhängung von dem IC-Befestigungsteil in Richtung auf das andere Ende der Aufhängung verlaufen;
**dadurch gekennzeichnet, dass** der Kopf-IC-Befestigungsteil auf einer Hauptfläche der Aufhängung so geschaffen ist, dass die Kopf-IC, wenn sie darin angeordnet ist, auf der einen Seite freigelegt ist und auf der der einen Seite gegenüberliegenden anderen Seite der Aufhängung auch vorsteht.

2. Aufhängung nach Anspruch 1, worin der zur Kopf-IC-Chipbefestigung vorbereitete Teil einen in der Aufhängung entlang der Längsrichtung der Aufhängung verlaufenden Teil (67) mit einer Fläche zum Tragen eines Kopf-IC-Chips aufweist, wobei beide Seiten des Teils mit einer Fläche zum Tragen eines Kopf-IC-Chips geschnitten werden und dann der Teil mit einer Fläche zum Tragen eines Kopf-IC-Chips zu der Seite der zweiten Oberfläche der Aufhängung gedrückt wird, so dass der Teil mit einer Fläche zum Tragen eines Kopf-IC-Chips auf der Seite der zweiten Oberfläche der Aufhängung positioniert wird, wobei der Kopf-IC-Chip auf dem Teil mit einer Fläche zum Tragen eines Kopf-IC-Chips befestigt wird.

3. Aufhängung nach Anspruch 1, worin:
der Kopf-IC-Chip (100A) einen ersten halben Teil und einen zweiten halben Teil aufweist, welcher erste halbe Teil einen Erweiterungsteil (100Ac) aufweist, der sich auf der Seite des ersten halben Teils lateral über den zweiten halben Teil des Kopf-IC-Chips hinaus erstreckt; und
der zur Kopf-IC-Chipbefestigung vorbereitete Teil (65A) eine Öffnung (140) mit einer Größe aufweist, so dass der zweite halbe Teil des Kopf-IC-Chips durch die Öffnung geht und der Erweiterungsteil des ersten halben Teils des Kopf-IC-Chips durch einen Umfangsteil der Öffnung getragen wird.

4. Aufhängung nach Anspruch 1, worin:
der zur Kopf-IC-Chipbefestigung vorbereitete Teil (65B) eine Öffnung (150) mit einer Größe aufweist, so dass der Teil des Kopf-IC-Chips durch die Öffnung geht.

5. Aufhängung nach Anspruch 1, worin:
die Aufhängung einen steifen Teil (33) zwischen dem ausladenden Ende und dem anderen Ende mit einem Rippenteil (41) an mindestens einer Seite desselben hat, so dass ein Biegen des steifen Teils verhindert wird; und
der zur Kopf-IC-Chipbefestigung vorbereitete Teil in dem steifen Teil gebildet ist.

6. Plattenvorrichtung, aufweisend:
ein Stellglied (24);
eine Platte (23-1, 23-2) ;
einen Arm (25), der durch das Stellglied angetrieben wird;
die Aufhängung (30) nach Anspruch 1;
ein Kopfgleitstück (90), das am Kopfgleitstück-Befestigungsteil der Aufhängung befestigt ist und einen Kopf (92) integral enthält; und
eine Kopf-IC (100; 100A; 100B), die am Kopf-IC-Befestigungsteil der Aufhängung befestigt ist.

7. Kopfgleitstückaufbau, aufweisend:
die Aufhängung (30) nach Anspruch 1;
ein Kopfgleitstück (90), das am Kopfgleitstück-Befestigungsteil der Aufhängung befestigt ist und einen Kopf (92) integral enthält; und
eine Kopf-IC (100; 100A; 100B), die am Kopf-IC-Befestigungsteil der Aufhängung befestigt ist.

8. Kopfgleitstückaufbau nach Anspruch 7, worin der zur Kopf-IC-Chipbefestigung vorbereitete Teil einen in der Aufhängung entlang der Längsrichtung der Aufhängung verlaufenden Teil (67) mit einer Fläche zum Tragen eines Kopf-IC-Chips aufweist, wobei beide Seiten des Teils mit einer Fläche zum Tragen eines Kopf-IC-Chips geschnitten werden und dann der Teil mit einer Fläche zum Tragen eines Kopf-IC-Chips zu der Seite der zweiten Oberfläche der Aufhängung gedrückt wird, so dass der Teil mit einer Fläche zum Tragen eines Kopf-IC-Chips auf der Seite der zweiten Oberfläche der Aufhängung positioniert wird, wobei der Kopf-IC-Chip auf dem Teil mit einer Fläche zum Tragen eines Kopf-IC-Chips befestigt wird.

9. Kopfgleitstückaufbau nach Anspruch 7, worin der zur Kopf-IC-Chipbefestigung vorbereitete Teil (65B) eine Öffnung (150) mit einer Größe aufweist, so dass der Teil des Kopf-IC-Chips durch die Öffnung geht.

10. Kopfgleitstückaufbau nach Anspruch 7, worin die Aufhängung einen steifen Teil (33) mit einem Rippenteil (41) an mindestens einer Seite desselben hat, so dass ein Biegen des steifen Teils verhindert wird; und der zur Kopf-IC-Chipbefestigung vorbereitete Teil in dem steifen Teil gebildet ist.

11. Aufhängung nach Anspruch 1, worin der Kopf-IC-Befestigungsteil einen Raum hat, der speziell geschaffen ist, damit die Kopf-IC so angeordnet wird, dass die Kopf-IC auf der einen Seite der Aufhängung freigelegt ist und auf der anderen Seite der Aufhängung auch vorsteht, wobei der Raum von einem Teil der Aufhängung umgeben ist.

12. Plattenvorrichtung, aufweisend:
ein Stellglied;
eine Platte;
einen Arm, der durch das Stellglied angetrieben wird;
die Aufhängung nach Anspruch 11;
ein Kopfgleitstück, das am Kopfgleitstück-Befestigungsteil der Aufhängung befestigt ist und einen Kopf integral enthält; und
eine Kopf-IC, die am Kopf-IC-Befestigungsteil der Aufhängung befestigt ist.

13. Kopfgleitstückaufbau, aufweisend:
die Aufhängung nach Anspruch 11;
ein Kopfgleitstück, das am Kopfgleitstück-Befestigungsteil der Aufhängung befestigt ist und einen Kopf integral enthält; und
eine Kopf-IC, die am Kopf-IC-Befestigungsteil der Aufhängung befestigt ist.

## Revendications

1. Suspension comportant une extrémité étendue et une autre extrémité, comprenant :
une partie (65;65A;65B) de montage d'un circuit intégré de tête entre ladite extrémité étendue et ladite autre extrémité pour le montage d'un circuit intégré de tête (100;100A;100B); et
une partie (31) de montage d'un patin de tête sur un côté de ladite extrémité étendue par rapport à ladite partie de montage du circuit intégré de tête pour le montage d'un patin de tête (90), le patin de tête étant monté sur un côté de ladite suspension;
des premiers moyens de câblage (42a à 45a) qui s'étendent le long de ladite suspension entre ladite partie (31) de montage du patin de tête et ladite partie de montage du circuit intégré de tête;
des secondes configurations de câblage (42b à 45b) qui s'étendent le long de ladite suspension depuis ladite partie de montage du circuit intégré en direction de ladite autre extrémité de ladite suspension;
**caractérisée en ce que**
ladite partie de montage du circuit intégré de tête est formée sur une surface principale de ladite suspension de telle sorte que lorsqu'il est disposé dans la suspension, ledit circuit intégré de tête est exposé sur ledit un côté de ladite suspension et fait saillie également sur l'autre côté de ladite suspension à l'opposé dudit premier côté.

2. Suspension selon la revendication 1, selon lequel ladite partie préarrangée de montage d'une plaquette à circuit intégré de tête comporte une partie de surface (67) qui supporte la plaquette du circuit intégré de tête et s'étend dans ladite suspension le long de la direction longitudinale de ladite suspension, les deux côtés de ladite partie de surface de support de la plaquette du circuit intégré de tête étant découpés, puis ladite partie de surface de support de la plaquette du circuit intégré de tête étant repoussée vers ledit côté de ladite seconde surface de ladite suspension de telle sorte que ladite partie de surface supportant la plaquette du circuit intégré de tête est positionnée sur ledit côté de ladite seconde surface de ladite suspension, ladite plaquette du circuit intégré de tête étant montée sur ladite partie de surface de support de la plaquette à circuit intégré de tête.

3. Suspension selon la revendication 1, dans laquelle :
ladite plaquette (100A) du circuit intégré de tête comprend une première moitié et une seconde moitié, ladite première moitié possédant une partie étendue (100Ac), qui s'étend latéralement au-delà de ladite seconde moitié de ladite plaquette à circuit intégré de tête sur le côté de ladite première moitié; et
ladite partie préarrangée (65A) de montage de la plaquette à circuit intégré comprend une ouverture (140) possédant une taille telle que ladite seconde moitié de ladite plaquette à circuit intégré de tête traverse ladite ouverture, et ladite partie étendue de ladite première moitié de ladite plaquette à circuit intégré de tête est supportée par une partie périphérique de ladite ouverture.

4. Suspension selon la revendication 1, dans laquelle :
ladite partie préarrangée (65B) de montage de la plaquette à circuit intégré de tête comprend une ouverture (150) possédant une taille telle que ladite partie de ladite plaquette à circuit intégré de tête traverse ladite ouverture.

5. Suspension selon la revendication 1, dans laquelle :
ladite suspension possède une partie rigide (33) située entre ladite extrémité étendue et ladite autre extrémité comportant une partie en forme de nervure (41) sur au moins un côté de telle sorte que ladite partie rigide ne peut fléchir; et
ladite partie préarrangée de montage de la plaquette à circuit intégré de tête est formée dans ladite partie rigide.

6. Dispositif de disque comprenant :
un actionneur (24);
un disque (23-1, 23-2);
un bras (25) entraîné par ledit actionneur;
la suspension (30) selon la revendication 1;
un patin de tête (90) monté sur la partie de montage du patin de tête de ladite suspension et incluant intégralement une tête (92); et
un circuit intégré de tête (100;100A;100B) monté sur la partie de montage du circuit intégré de tête de ladite suspension.

7. Ensemble de patin de tête comprenant :
la suspension (30) telle que revendiquée dans la revendication 1;
un patin de tête (90) monté sur la partie de montage du patin de tête de ladite suspension et incluant intégralement une tête (92); et
un circuit intégré de tête (100;100A;100B) monté sur la partie de montage du circuit intégré de tête de ladite suspension.

8. Ensemble formant patin de tête selon la revendication 7, dans laquelle ladite partie préarrangée de montage de ladite plaquette à circuit intégré de tête comprend une partie de surface (67) de surface de la plaquette à circuit intégré de tête, qui s'étend dans ladite suspension le long de la direction longitudinale de ladite suspension, les deux côtés de ladite partie de surface de support de la plaquette à circuit intégré de tête étant découpés, puis ladite partie de surface de support de la plaquette à circuit intégré de tête étant repoussé sur ledit côté de ladite seconde surface de ladite suspension de telle sorte que ladite partie de surface de support de la plaquette à circuit intégré de tête est positionnée contre ledit côté de ladite seconde surface de ladite suspension, ladite plaquette à circuit intégré de tête étant montée sur ladite partie de surface de support de la plaquette à circuit intégré de tête.

9. Ensemble de patin de tête selon la revendication 7, dans lequel ladite portion préarrangée (65B) de montage de la plaquette à circuit intégré de tête comprend une ouverture (150) possédant une taille telle que ladite portion de ladite plaquette à circuit intégré de tête traverse ladite ouverture.

10. Ensemble de patin de tête selon la revendication 7, dans lequel ladite suspension possède une partie rigide (33) comportant une partie en forme de nervure (41) sur au moins un côté, de sorte que ladite partie rigide ne peut pas fléchir; et ladite partie préarrangée de montage de la plaquette à circuit intégré de tête est formée dans ladite partie rigide.

11. Suspension selon la revendication 1, dans laquelle ladite partie de montage du circuit intégré de tête comporte un espace spécialement conformé pour que le circuit intégré de tête soit disposé de telle sorte que ledit circuit intégré de tête soit exposé sur ledit un côté de ladite suspension et également fasse saillie sur l'autre côté de ladite suspension, ledit espace étant entouré par une partie de ladite suspension.

12. Dispositif de disque comprenant :
un actionneur;
un disque;
un bras entraîné par ledit actionneur;
la suspension telle que revendiquée dans la revendication 11;
un patin de tête monté sur la partie de montage du patin de tête de ladite suspension et incluant intégralement une tête; et
un circuit intégré de tête monté sur la partie de montage du circuit intégré de tête de ladite suspension.

13. Ensemble de patin de tête comprenant :
la suspension telle que revendiquée dans la revendication 11;
un patin de tête monté sur la partie de montage du patin de tête de ladite suspension et incluant intégralement une tête; et
un circuit intégré de tête monté sur la partie de montage du circuit intégré de tête de ladite suspension.
